# EUROPÄISCHE PATENTANMELDUNG

(11) **EP 3 572 389 A1**
(43) Veröffentlichungstag der Anmeldung: **27.11.2019**
(21) Anmeldenummer: 19000194.1
(22) Anmeldetag: 23.04.2019
(51) Int. Cl.: C05F 3/00, C05F 3/06, G01N 1/08, G01N 1/12, G01N 1/14, G01N 21/3577, G01N 21/359, G01N 21/84, A01C 23/00

(54) **MOBILE ANALYSEVORRICHTUNG**

(30) Priorität: 24.05.2018 DE 202018002521 U
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die Erfindung betrifft eine mobile Analysevorrichtung (10) zur Bestimmung von chemischen Eigenschaften von Biomasse (9a, 9b, 9c), insbesondere Gülle, in einem Biomasse-Behälter (8), aufweisend eine Pumpe (1) zum Heraussaugen einer Probe aus der Biomasse (9a, 9b, 9c), einen ersten Anschluss (5a) der Analysevorrichtung (10) an ein zuführendes Rohrleitungssystem (7a), einen zweiten Anschluss (5b) der Analysevorrichtung (10) an ein abführendes Rohrleitungssystem (7b), und eine Sensoreinheit (2) zum Erfassen von Daten der Probe der Biomasse (9a, 9b, 9c), wobei die Sensoreinheit (2) die Daten der Probe der Biomasse (9a, 9b, 9c) beim Vorbeileiten der Probe an der Sensoreinheit (2) erfasst.

## Beschreibung

Die vorliegende Erfindung betrifft eine mobile Analysevorrichtung zur Bestimmung von chemischen Eigenschaften von Biomasse, insbesondere Gülle, in einem Biomasse-Behälter.

Landwirtschaftliche Gülle, auch Flüssigmist genannt, sind komplexe Flüssig-Feststoff-Gemische aus tierischem Kot, Ham und Einstreu-Anteilen, sowie Spül- und Reinigungswasser. Sie werden als landwirtschaftlicher Dünger eingesetzt und entstammen im Allgemeinen der Schweine- oder Rindermasthaltung, aber auch der Geflügelhaltung sowie aus Biogasanlagen.

Für Dünger gilt, dass ein bedarfsgerechter und somit ökonomischer und ordnungsgemäßer Einsatz nur dann möglich ist, wenn einerseits der Nährstoffbedarf der Kultur und andererseits der Nährstoffgehalt des jeweiligen Düngers exakt bekannt sind. Eine entsprechende Kenntnis der jeweiligen Nährstoffkonzentration und der damit verbundene gezielte Einsatz werden bei Wirtschaftsdüngern durch große Schwankungsbreiten hinsichtlich enthaltener Nährstoffgehalte erschwert. Nährstoffkonzentrationen sind im Einzelfall multifaktoriell durch Tierart, Fütterung, Halterungsverfahren, Lagerung, Jahreszeit und insbesondere durch die Bewirtschaftungsintensität bestimmt.

Wichtige mineralische Düngerstoffe in den Güllen sind Natrium, Kalium, Magnesium, Calcium, Eisen, Phosphat und Pyridionen. Neben den anorganischen Salzen enthalten sie vor allem Harnstoff und Harnsäure und damit gebundenen Stickstoff. Die Gülle beziehungsweise die Güllen werden in der Regel bis zu ihrer Ausbringung auf landwirtschaftlicher Fläche in Senkgruben oder anderen Güllevorratsbehältern gelagert.

Die deutsche Düngeverordnung (DüV) sowie die Nitratrichtlinie (91/676;EWG), die eine Verunreinigung des Grund- und des Oberflächenwassers durch Nitrate aus der Landwirtschaft vor allem durch Düngung verhindern soll, regeln die Anwendung von Düngemitteln, Bodenhilfsstoffen und dergleichen für landwirtschaftlich genutzte Bodenflächen. So muss beispielsweise die dünne Bedarfsermittlung so erfolgen, dass ein Gleichgewicht zwischen dem voraussichtlichen Nährstoffbedarf und der Nährstoffversorgung gewährleistet ist. Zudem dürfen bestimmte Inhaltsstoffe, wie beispielsweise Stickstoff, Phosphat oder Nitrat nur in einer bestimmten Höchstmenge pro Hektar und Jahr ausgebracht werden.

Für eine Düngebedarfsermittlung ist es daher notwendig, zunächst den Nährstoffbedarf für ein pflanzenbaulich genutztes Ackerland und anschließend den Nährstoffgehalt der bei dem jeweiligen Landwirt gerade vorrätig gehaltenen Gülle zu bestimmen.

Die EP 3 282 246 A1 beschreibt beispielsweise eine Analysevorrichtung mit einer Tauch-Sensoreinheit, mit der es nicht mehr notwendig ist, mittels beispielsweise einer Probeflasche eine Probe aus dem Gülletank zu entnehmen und diese in einem Labor extern untersuchen zu lassen. Externe Untersuchungen im Labor weisen insbesondere den Nachteil auf, dass das Ergebnis zeitverzögert vorliegt. Zudem wird die Probe meist ungekühlt an das Labor gesendet, womit die Probe während des Transports weiter ausgast und somit verfälschte Werte auftreten können. Nachteilig bei der Tauch-Sensoreinheit nach dem Stand der Technik ist jedoch, dass die Tauch-Sensoreinheit vollständig von einem fluidundurchlässigem Gehäuse umgeben sein muss. Ein Verschmutzen der Tauch-Sensoreinheit durch den Eintauchprozess ist nicht zu vermeiden. Säubernde Komponenten, wie beispielsweise Scheibenwischer, sind zwangsläufig notwendig. Zudem ist die Tauch-Sensoreinheit während des Messvorgangs außerhalb der Reichweite des Nutzers, womit sich eine Reparatur und/oder Wartung der Elektronik erschwert.

Aufgabe der vorliegenden Erfindung ist es, eine mobile Analysevorrichtung anzugeben, die die oben genannten Nachteile nur reduziert oder nicht aufweisen, die sich also insbesondere durch unverfälschte Messergebnisse sowie sofortiges Ablesen der Messergebnisse auszeichnet, und gleichzeitig eine vereinfachte, fehlerunanfällige, mobile Messmethode mit optimalen Messergebnissen bereitstellt.

Diese Aufgaben werden durch eine mobile Analysevorrichtung mit den Merkmalen des Anspruchs 1 gelöst. Vorteilhafte Weiterbildungen der Erfindung sind Gegenstand der Unteransprüche.

Erfindungsgemäß ist eine mobile Analysevorrichtung zur Bestimmung von chemischen Eigenschaften von Biomasse, insbesondere Gülle, in einem Biomasse-Behälter vorgesehen. Die Analysevorrichtung weist eine Pumpe zum Heraussaugen einer Probe aus der Biomasse, einen ersten Anschluss der Analysevorrichtung an ein zuführendes Rohrleitungssystem, einen zweiten Anschluss der Analysevorrichtung an ein abführendes Rohrleitungssystem, und eine Sensoreinheit zum Erfassen von Daten der Probe der Biomasse auf. Die Sensoreinheit erfasst dabei die Daten der Probe der Biomasse beim Vorbeileiten der Probe an dieser Sensoreinheit.

Die Erfindung basiert auf der Idee, dass es durch die erfindungsgemäße Analysevorrichtung nun nicht mehr erforderlich ist, mittels einer Probenflasche oder dergleichen eine Probe aus dem Tank zu entnehmen und diese extern in einem Labor untersuchen zu lassen. Es liegt der Erfindung die Erkenntnis zugrunde, dass eine erhebliche Vereinfachung dadurch erreicht werden kann, dass die Sensoreinheit an den Ort gebracht wird, an dem die Daten erfasst werden sollen, nämlich an den Biomasse-Behälter, in dem die zu vermessene Biomasse gelagert ist. Mit Vorteil werden die Daten der Probe der Biomasse dabei nicht durch Eintauchen der Sensoreinheit in die Biomasse erfasst, sondern die zu analysierende Probe der Biomasse wird an der Sensoreinheit vorbeigeleitet beziehungsweise vorbeigeführt und währenddessen vermessen. Die Sensoreinheit muss damit nicht die Eigenschaften aufweisen, die sie aufweisen müsste, wenn sie direkt in die Biomasse eingetaucht werden würde, wie beispielsweise fluiddicht und verschmutzungsunanfällig zu sein. Komponenten, die zur Reinigung einer eintauchenden Sensoreinheit notwendig sind, um ein zuverlässiges Ergebnis zu gewährleisten, sind vorliegend also mit Vorteil nicht notwendig. Eine vereinfachte, fehlerunanfällige Messmethode einer mobilen Analysevorrichtung ermöglicht sich mit Vorteil.

Vorteilhafterweise ist die erfindungsgemäße Analysevorrichtung flexibel einsetzbar und nicht an einen bestimmten Biomasse-Behälter gekoppelt. Aufgrund des ersten und zweiten Anschlusses der Analysevorrichtung ist es mit geringem Aufwand möglich, aus jeglicher Grube, Lagune beziehungsweise Behälter die darin aufbewahrte Biomasse zu saugen und zu analysieren. Vorteilhafterweise können jegliche Arten von Kupplungen an die Anschlüsse der Analysevorrichtung angeschlossen werden, so dass ein flexibler Einsatz der mobilen Analysevorrichtung möglich ist.

Aufgrund der in der Analysevorrichtung integrierten Pumpe weist die Analysevorrichtung selbstansaugende Eigenschaften der Biomasse auf. Zudem ist ein Messen als Bypasspumpe in einer Prozesskette möglich.

Unter einer "mobilen" Analysevorrichtung ist vorliegend insbesondere eine bewegbare Analysevorrichtung zu verstehen, die insbesondere kompakt und leicht fortzubewegen ist. Dadurch ermöglicht sich mit Vorteil ein flexibler Einsatz, beispielsweise auch an Güllelagerbehältern direkt am Feld. Hierzu ist insbesondere keine weitere zusätzliche Maschine wie beispielsweise ein Traktor notwendig. Ein kleinstmöglicher Aufwand zum Vermessen der zu analysierenden Biomasse ermöglicht sich mit Vorteil.

Unter einer "chemischen Zusammensetzung" beziehungsweise Eigenschaften der Biomasse, insbesondere der Güllemischung, wird im Rahmen der Anmeldung die Konzentration beispielsweise an Alkali- und Erdalkalimetallen, insbesondere an Kalium, Calcium und/oder Magnesium, insbesondere in Form ihrer anorganischen Salze, und die Konzentration an Stickstoff, Phosphor und/oder Schwefel gebunden oder frei in Kilogramm pro Kubikmeter verstanden. Selbstverständlich können die Konzentrationen auch in Gramm pro Kilogramm, beispielsweise aufgeteilt als Gesamtstickstoffgehalt und Ammoniumgehalt angegeben werden.

Als "Biomasse-Behälter" kommen beispielsweise Senkgruben, Güllegruben oder andere Güllebehälter in Frage. Gegebenenfalls wird die Gülle in dem Biomasse-Behälter von Zeit zu Zeit durch Rühren homogenisiert, um die dauerhafte Bildung von Sink- und Schwimmschichten zu vermeiden.

Unter einer "Pumpe" ist insbesondere jegliche Pumpe zu verstehen, die ein Heraussaugen der Probe der Biomasse aus dem Biomasse-Behälter gewährleistet. Beispielsweise weist die Pumpe einen Pumpendurchsatz von ca. 600 l/min (statistische Menge) auf. Je länger die Pumpe dabei in Betrieb ist, umso zuverlässiger ist der zu ermittelnde statistische Wert.

Während die Gülle vorbeifließt werden Einzelwerte in sehr kurzen Zeitabständen, z.B. Zehntelsekunden, aufsummiert. Aus dieser großen Anzahl von Messungen können sehr genaue gemittelte Messwerte erhalten werden, wesentlich genauer als eine einzelne Messung.

Als "erster Anschluss" der Analysevorrichtung ist insbesondere eine flexible Kupplung für verschiedene Anschlüsse an Lagern zu verstehen, die beispielsweise an Schläuche angeschlossen werden können oder aber vorhandene Sauganschlüsse verwenden. Hierzu sind beispielsweise Adapter am ersten Anschluss für alle gängigen Systeme möglich. Ein Leitungsdurchmesser des ersten Anschlusses liegt beispielsweise bei etwa 100 mm, wodurch sich unter anderem ein Saugen ohne Kavitation bei kleinen Anlagen ermöglicht.

Als "zuführendes Rohrleitungssystem" ist beispielsweise ein Gülleschlauch beziehungsweise ein Saugschlauch zu verstehen. Auch Rohre oder jegliche Leitungssysteme, die zum Ansaugen und Durchleiten von Gülle geeignet sind, sind hier verwendbar. Das zuführende Rohrleitungssystem erfüllt insbesondere die Aufgabe, die Biomasse aus dem Biomasse-Behälter heraus zu saugen beziehungsweise herauszuleiten und an der Sensoreinheit vorbeizuführen.

Der "zweite Anschluss" der Analysevorrichtung ist entsprechend des ersten Anschlusses der Analysevorrichtung ausgebildet und weist dieselben Eigenschaften auf. Insbesondere dient der zweite Anschluss ebenfalls zum Anschließen von Schläuchen oder Sauganschlüssen, beispielsweise über eine Kupplung oder einen Adapter. Das "abführende Rohrleitungssystem" ist entsprechend dem zuführenden Rohrleitungssystem ausgebildet und erfüllt insbesondere die Aufgabe, die Biomasse von der Sensoreinheit abzuführen oder weg zu leiten; beispielsweise zurück in den Biomasse-Behälter oder aber in einen weiteren, dafür vorgesehenen beispielsweise transportablen Behälter.

Unter einer "Sensoreinheit" ist jegliche Sensoreinheit zu verstehen, die ein Erfassen von Daten der Probe der Biomasse ermöglicht. Beispielsweise weist die Sensoreinheit einen Spektroskopie-Sensor auf. Mittels eines derartigen Sensors ist ein Spektrum der Biomasse, die benachbart zu der Sensoreinheit angeordnet oder vorbeigeleitet wird, aufnehmbar. Der Spektroskopie-Sensor beleuchtet dazu den aufzunehmenden Bereich der Biomasse und empfängt reflektierte Strahlung, die dann in Form des Spektrums analysiert werden kann. Bevorzugt ist der Spektroskopie-Sensor als IR (Infrarot)-Spektroskopie-Sensor ausgebildet. Infrarot-Spektroskopie hat sich in der Vergangenheit für externe Analyseeinheiten bewährt und ist ein bekannter und robuster Prozess. Daten können so zuverlässig, mit hoher Messgenauigkeit, mit kleinstmöglichen Aufwand und mit statistischer Aussagekraft erfasst werden.

Erfindungsgemäß erfasst die Sensoreinheit die Daten der Probe der Biomasse beim Vorbeileiten dieser Probe an der Sensoreinheit. Die Sensoreinheit kommt damit vorliegend nicht in direkten Kontakt mit der Biomasse, sondern analysiert diese im Vorbeifließen. Die Biomasse wird während des Vermessens beziehungsweise Analysierens also in einem Leitsystem an der Sensoreinheit vorbeigeführt, wobei mittels Strahlung die erwünschten Daten der Biomasse erfasst werden. Aufgrund des nicht direkten Kontakts mit der Biomasse reduziert sich mit Vorteil die Gefahr eines Verschmutzens der Sensoreinheit mit Biomasse. Vorkehrungen diesbezüglich sind vorteilhafterweise nicht notwendig, da lediglich das Rohrleitungssystem mit der Biomasse in direkten Kontakt gelangt.

Um ein Vermessen der Probe zu gewährleisten, kann das Rohrleitungssystem im dafür vorgesehenen Bereich, insbesondere im Bereich der Sensoreinheit, ein Sichtfenster aufweisen, durch das die für die Analyse notwendige Strahlung auf die Probe der Biomasse treffen kann.

Bei einer bevorzugten Weiterbildung der Erfindung ist die Sensoreinheit während dem Erfassen der Daten der Probe der Biomasse außerhalb des Biomasse-Behälters angeordnet. Die Sensoreinheit wird vorliegend also nicht in die Biomasse oder in den Biomasse-Behälter eingetaucht, sondern ist extern beziehungsweise außerhalb der Biomasse beziehungsweise des Biomasse-Behälters stationiert. Ein Verschmutzen der Sensoreinheit und hierzu notwendige Vorkehrungen sind vorliegend mit Vorteil nicht notwendig. Zudem ermöglicht sich so ein einfaches Ankoppeln der Analysevorrichtung an den dafür vorgesehenen Biomasse-Behälter über den ersten Anschluss. Eine saubere, mobile und flexibel einsetzbare Analysevorrichtung ermöglicht sich mit Vorteil.

Bei einer bevorzugten Weiterbildung der Erfindung ist die Sensoreinheit zur vorbeileitenden Probe beabstandet angeordnet. Die Sensoreinheit kommt während dem Messvorgang also nicht direkt in Kontakt mit der Probe. Insbesondere ist die Sensoreinheit direkt benachbart oder angrenzend an eine Leitung angeordnet, in der die vorbeileitenden beziehungsweise vorbeifließende Probe der Biomasse geleitet wird. Vorzugsweise trennt dabei ein Fenster der Leitung die Sensoreinheit von der vorbeifließenden Probe der Biomasse. Durch ständiges Vorbeifließen der Gülle wird das Fenster ständig gespült und sauber gehalten sodass Messwerte nicht durch Schmutz am Fenster verfälscht werden.

Bei einer bevorzugten Weiterbildung der Erfindung ist die Probe der Biomasse zum Erfassen über den ersten Anschluss aus dem Biomasse-Behälter heraussaugbar und nach dem Erfassen über den zweiten Anschluss abführbar, beispielsweise zurück in den Biomasse-Behälter oder in einen dafür vorgesehenen weiteren, beispielsweise mobilen Behälter, leitbar. Die zu analysierende Probe der Biomasse verbleibt während der Analyse also nicht in dem Biomasse-Behälter, sondern wird aus diesem herausgeleitet, der Sensoreinheit zugeführt beziehungsweise an der Sensoreinheit vorbeigeleitet, und von der Sensoreinheit anschließend weg geleitet.

Die Analysevorrichtung ist vorliegend aufgrund des ersten und des zweiten Anschlusses als Zirkulationsvorrichtung ausgebildet. Die zu analysierende Probe wird zur Vermessung zirkulierend aus dem Biomasse-Behälter heraus, an der Sensoreinheit vorbei und beispielsweise in den Biomasse-Behälter zurückgeleitet.

Bei einer bevorzugten Weiterbildung der Erfindung weist die Analysevorrichtung eine Datenübertragungseinheit zum Übertragen der erfassten Daten auf. Vorzugsweise weist die Datenübertragungseinheit eine Speichereinheit zum Zwischenspeichern der erfassten Daten auf. Die Speichereinheit ist vorzugsweise dazu vorgesehen, die Daten auf einem entfernbaren Datenträger, wie beispielsweise einer Speicherkarte oder dergleichen, zu speichern. Alternativ ist die Speichereinheit so ausgebildet, dass sie nach Abschluss des Erfassungsvorgangs ausgelesen werden kann, beispielsweise durch Anschluss der Datenübertragungseinrichtung an eine Analysestation einer Kabelverbindung oder einer drahtlosen Verbindung. Es kann ebenfalls vorgesehen sein, dass die Datenübertragungseinrichtung eine Funkeinheit aufweist, so dass die erfassten Daten drahtlos übertragen sind. Die Übertragung kann teilweise gleichzeitig oder nach Abschluss eines Erfassungsvorgangs ausgeführt werden. Beispielsweise bietet sich eine Datenübertragung mittels Bluetooth, WLAN oder dergleichen an.

Eine Auftragsbearbeitung und Dokumentation der Messwerte ist vorzugsweise mit einer vorgesehenen Software beispielsweise über einen CCI Terminal mit Drucker möglich.

Bei einer bevorzugten Weiterbildung der Erfindung weist die Sensoreinheit einen Spektroskopie Sensor, insbesondere einen in NIRS Sensor (Nahinfrarotspektroskopie) auf. Insbesondere Nahinfrarotspektroskopie hat sich bewährt, Daten von Biomasse zu erfassen.

Bei einer bevorzugten Weiterbildung der Erfindung ist das zuführende Rohrleitungssystem zum Herauspumpen der zu analysierenden Probe in die Biomasse einführbar. Beispielsweise ist das zuführende Rohrleitungssystem ein Saugschlauch. Dieser Saugschlauch wird zum Herauspumpen der zu analysierenden Probe in die Biomasse eingetaucht beziehungsweise in den Biomasse-Behälter hineingehängt. Durch die in der Analysevorrichtung integrierte Pumpe kann die zu analysierende Probe selbstansaugend über den Saugschlauch an die Sensoreinheit weitergeleitet werden.

Bei einer bevorzugten Weiterbildung der Erfindung weist das zuführende Rohrleitungssystem zur schichtweisen Analyse der Biomasse in einem eintauchbaren Bereich eine Mehrzahl von in einem Abstand angeordnete Öffnungen auf. Durch die Mehrzahl von Öffnungen können mit Vorteil gleichzeitig Proben unterschiedlicher Schichten der Biomasse herausgesaugt und analysiert werden. Eine statistische Aussagekraft schichtübergreifend ermöglicht sich mit Vorteil. Eine Homogenisierung der Biomasse in den Biomasse-Behälter ist so mit Vorteil nicht notwendig. Ein statistisches Mittel der Inhaltsstoffe der Biomasse kann anhand der durchmischten Probe abgebildet werden.

Alternativ ist es möglich, während des Ansaugens der zu analysierenden Probe den Saugschlauch beziehungsweise das zuführende Rohrleitungssystem langsam in vertikaler Richtung durch die einzelnen Schichten der Biomasse aufzuziehen beziehungsweise herauszuziehen, womit ebenfalls die verschiedenen beziehungsweise unterschiedlichen Schichten der Biomasse angesaugt und vermessen werden können, wodurch ein statistisches Mittel der Inhaltsstoffe der Biomasse ermittelt werden kann. Ein Aufrühren und Homogenisieren der Biomasse im Biomasse-Behälter beispielsweise mittels eines Rührwerks ist mit Vorteil nicht notwendig. Eine vereinfachte und insbesondere arbeitsunaufwändige Analyse ermöglicht sich mit Vorteil.

Bei einer bevorzugten Weiterbildung der Erfindung weist die Analysevorrichtung einen Elektromotor zum Antreiben der Pumpe auf. Aufgrund des Elektromotors entstehen vorteilhafterweise keine Abgase beziehungsweise CO2-Emissionen am Arbeitsplatz beziehungsweise an der Messstation. Bevorzugt ist eine Menge der zu analysierenden Probe über die Drehzahl des Elektromotors beziehungsweise über das Schluckvolumen bestimmbar. Eine einfache und zuverlässige Messung ermöglicht sich somit Vorteil.

Ein Verfahren zum Bestimmen von chemischen Eigenschaften von Biomasse, insbesondere Gülle, in einem Biomasse-Behälter mit einer derartigen mobilen Analysevorrichtung umfasst folgende Verfahrensschritte:
- Heraussaugen einer Probe aus der Biomasse mittels einer Pumpe über einen ersten Anschluss der Analysevorrichtung,
- Erfassen der Daten der Probe der Biomasse mittels einer Sensoreinheit, wobei die Daten der Probe der Biomasse beim Vorbeileiten der Probe an der Sensoreinheit erfasst werden, und
- Ableiten der Probe zurück in den Biomasse-Behälter über einen zweiten Anschluss der Analysevorrichtung.

Jegliche oben beschriebenen Merkmale und Vorteile, die die Analysevorrichtung oder Komponenten hiervon betreffen, finden ebenfalls Anwendung bei dem erfindungsgemäßen Verfahren und werden an dieser Stelle nicht explizit wiederholt.

Die Erfindung betrifft weiter eine Verwendung einer derartigen mobilen Analysevorrichtung zur Bestimmung von chemischen Eigenschaften von Biomasse, insbesondere Gülle, in einem Biomasse-Behälter.

Jegliche oben beschriebenen Merkmale und Vorteile, die die Analysevorrichtung oder Komponenten hiervon betreffen, finden ebenfalls Anwendung bei der erfindungsgemäßen Verwendung und werden an dieser Stelle nicht explizit wiederholt.

Weitere Vorteile, vorteilhafte Ausführungsformen und Weiterbildungen der Analysevorrichtung ergeben sich aus den im Folgenden in Verbindung mit den Figuren beschriebenen Ausführungsformen. Es zeigen:
- Figur 1:: eine schematische Aufsicht auf ein Ausführungsbeispiel einer erfindungsgemäßen Analysevorrichtung,
- Figur 2:: eine skizzenhafte Ansicht eines Ausführungsbeispiels einer erfindungsgemäßen Analysevorrichtung während dem Messvorgang, und
- Figur 3:: einen schematischen Querschnitt eines Ausführungsbeispiels einer erfindungsgemäßen Analysevorrichtung.

In den Ausführungsbeispielen und den Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

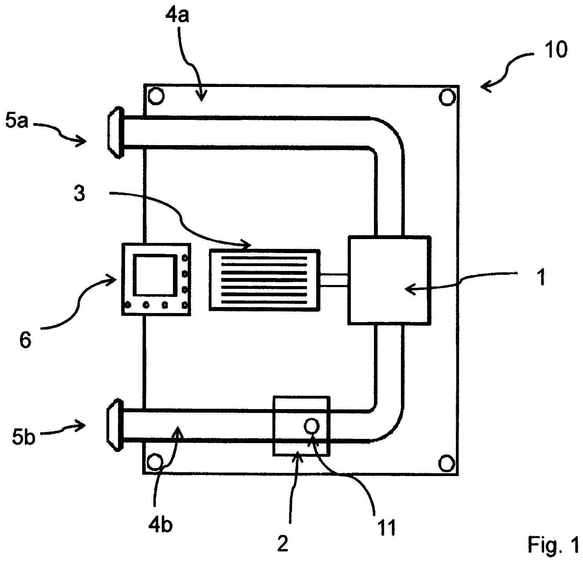

In Figur 1 ist eine erfindungsgemäße mobile Analysevorrichtung 10 gezeigt, die unter anderem eine Pumpe 1, eine Sensoreinheit 2, einen Elektromotor 3 und eine Datenübertragungseinheit 6 aufweist. Die Analysevorrichtung 10 ist zur Bestimmung von chemischen Eigenschaften von Biomasse, beispielsweise Gülle, vorgesehen. Zur Analyse der Gülle wird eine Probe aus der Gülle mittels der Pumpe 1 herausgesaugt. Hierzu wird ein erster Anschluss 5a der Analysevorrichtung 10 an ein zuführendes Rohrleitungssystem, beispielsweise an einen Saugschlauch, mittels beispielsweise eines Adapters angeschlossen. Über den ersten Anschluss 5a und einer weiterführenden Leitung 4a wird die zu analysierende Probe an der Sensoreinheit 2 vorbeigeführt, über eine weiterführende Ableitung 4b an einen zweiten Anschluss 5b weitergeleitet und über ein abführendes Rohrleitungssystem beispielsweise an den Biomasse-Behälter zurückgeführt.

Bei dem Vorbeileiten der Probe der Gülle an der Sensoreinheit 2 werden gewünschte Daten der Probe mittels der Sensoreinheit 2 erfasst. Hierzu weist die Sensoreinheit 2 einen Infrarotsensor, insbesondere einen NIRS Sensor auf. Der NIRS Sensor leuchtet durch ein kleines Fenster 11 in der Leitung auf die vorbeifließende Gülle. Das Farbspektrum des reflektierenden Lichts wird in Wellen zerlegt und aufgezeichnet. Dieses Spektrum kann mit vorhandenen Nährstoffdateien abgeglichen werden, woraus Nährstoffe der Gülle ermittelt werden können. So lassen sich Rückschlüsse auf den Nährstoffgehalt der Gülle schließen und insbesondere ermitteln.

Die Sensoreinheit 2 kommt während dem Messvorgang nicht direkt in Kontakt mit der Gülle, sondern ist zur vorbeifließenden Gülle in einem Abstand angeordnet. Insbesondere ist die Sensoreinheit 2 direkt benachbart oder angrenzend an die Leitung angeordnet, in der die vorbeifließende Gülle geleitet wird. Das kleine Fenster 11 der Leitung trennt dabei die Sensoreinheit 2 von der vorbeifließenden Gülle.

Die Analysevorrichtung 10 kann insgesamt als Zirkulationsvorrichtung angesehen werden, da die zu analysierende Probe über den ersten Anschluss 5a, die weiterführende Leitung 4a, die weiterführende Ableitung 4b und den zweiten Anschluss 5b zirkulierend von dem Biomasse-Behälter in den Biomasse-Behälter geleitet wird.

Durch die in der Analysevorrichtung 10 integrierte Pumpe 1 ist die Analysevorrichtung 10 selbstansaugend ausgebildet. Weitere Pumpen oder ähnliches zum Transport der Probe beziehungsweise zu analysierenden Biomasse sind nicht notwendig. Die Pumpe 1 wird über den Elektromotor 3 betrieben. Beispielsweise beträgt der Pumpendurchsatz in etwa 600 l/min (statistische Menge). Je länger dabei die Pumpe läuft, umso genauer ist der ermittelte statistische Wert.

Die Menge der entnommenen Probe der Biomasse kann über die Drehzahl des Elektromotors 3 beziehungsweise über das Schluckvolumen der Pumpe bestimmt werden. Eine hohe Messgenauigkeit mit kleinstmöglichem Aufwand und statistischer Aussagekraft betreffend den Nährstoffgehalt sowie die entnommene Menge können somit Vorteil gewährleistet werden.

An dem ersten Anschluss 5a und dem zweiten Anschluss 5b sind verschiedene Kupplungen beziehungsweise Adapter für verschiedene Anschlüsse möglich. Ein flexibler Einsatz der Analysevorrichtung 10 ermöglicht sich mit Vorteil. Damit können mitgebrachte Schläuche an der Analysevorrichtung 10 angeschlossen werden, sowie an dem Biomasse-Behälter vorhandene Sauganschlüsse Verwendung finden.

Mit der mobilen Analysevorrichtung 10 ist es mit einem geringen Aufwand möglich, aus jeglicher Grube, Lagune oder Behälter den Nährstoffgehalt der darin gelagerten Biomasse zu bestimmen. Auch Messungen direkt vor Ort am Feld von Güllelagerbehältern sind durch die Mobilität der Analysevorrichtung 10 möglich. Die Auftragsbearbeitung und Dokumentation der Messwerte können mithilfe einer Software beispielsweise über einen CCI Terminal 6 mit Drucker erfolgen.

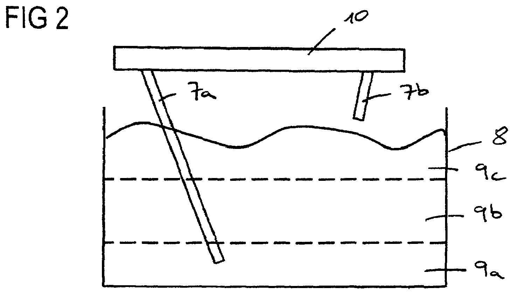

Figur 2 zeigt den Messvorgang mittels der Analysevorrichtung 10, beispielsweise des Ausführungsbeispiels der Figur 1, an einem Biomasse-Behälter 8. In dem Biomasse-Behälter 8, der beispielsweise ein Güllebehälter ist, befindet sich die zu analysierende Biomasse 9a, 9b, 9c. Bei einer in einem Güllebehälter gelagerten Gülle bilden sich meist Schwimmschichten 9b, 9c und Sinkschichten 9a, die sich in ihrer Trockensubstanz und in ihrem Nährstoffgehalt zum Teil erheblich unterscheiden. Dies erschwert die Probenentnahme deutlich, da die Probenentnahme mehrerer Proben aus verschiedenen Höhen beziehungsweise Schichten zu unterschiedlichen Ergebnissen führen. Um eine deutlich erschwerte Homogenisierung der Biomasse beispielsweise mittels eines Rührwerks zu vermeiden, ist es für eine statistisch aussagekräftige Messung über jegliche Schichten der Biomasse möglich, eine schichtweise Messung durchzuführen. Hierzu wird ein zuführendes Rohrleitungssystem 7a, das beispielsweise ein Saugschlauch ist, bis in die tiefste Schicht, beispielsweise die Sinkschicht 9a eingetaucht. Während der Messung beziehungsweise während der Probenentnahme wird nun zur schichtweisen Messung das zuführende Rohrleitungssystem 7a in vertikaler Richtung durch alle Schichten 9a, 9b, 9c der Gülle herausgezogen. Während dem Ansaugprozess können so aus jeglichen Schichten der Gülle Proben entnommen und mittels der Analysevorrichtung 10 vermessen und ein statistischer Mittelwert ermittelt werden. Eine Homogenisierung der Gülle ist damit nicht notwendig. Ein zuverlässiges Ergebnis kann durch das langsame Herausziehen und durch die schichtweise Entnahme der Proben gewährleistet werden. Durch das Errechnen des Mittelwerte3s aller Einzelmessungen erhält man die Durchschnittswerte der Gülle ohne den Behälter aufrühren zu müssen.

Nach dem Analysevorgang in der Analysevorrichtung 10 wird die analysierte Probe beziehungsweise Gülle über ein abführendes Rohrleitungssystem 7b beispielsweise zurück in die Biomasse 9a, 9b, 9c beziehungsweise den Biomasse-Behälter 8 geleitet. Das abführende Rohrleitungssystem 7b ist dabei an den zweiten Anschluss 5b der Analysevorrichtung 10, beispielsweise über eine Kupplung oder einen Adapter, vorzugsweise fluidleitend angeschlossen.

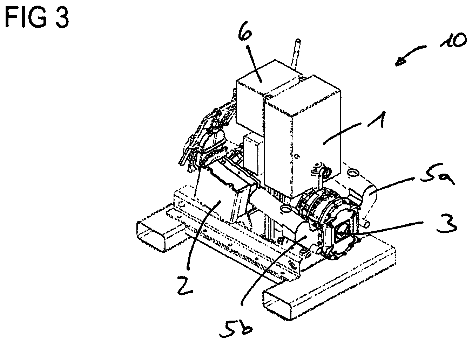

Figur 3 zeigt eine dreidimensionale Queransicht einer erfindungsgemäßen Analysevorrichtung 10, die beispielsweise entsprechend des Ausführungsbeispiels der Figur 1 ausgestaltet ist. Die Analysevorrichtung 10 weist einen ersten Anschluss 5a auf, durch den die entnommene, zu analysierende Probe der Biomasse zur Sensoreinheit 2 geleitet wird. Nach dem Messvorgang wird diese analysierte Probe durch einen zweiten Anschluss 5b wieder aus der Analysevorrichtung 10 ausgeleitet, beispielsweise zurück in den Biomasse-Behälter geleitet. Um eine selbstansaugende Analysevorrichtung 10 zu gewährleisten, weist diese eine integrierte Pumpe 1 auf, die mittels eines Elektromotors 3 betrieben wird. Die Drehzahl des Elektromotors 3 gibt dabei die Menge der entnommenen Probe wider. Zum Auswerten, Speichern und/oder Weiterleiten der ermittelten Daten der Probe weist die Analysevorrichtung 10 eine Datenübertragungseinheit 6, beispielsweise einen Terminal oder Computer mit einem Drucker, auf.

Die entnommene und zu analysierende Probe wird in einer weiterführenden Leitung 4a an der Sensoreinheit 2 vorbeigeführt, wobei mittels eines in der Sensoreinheit 2 integrierten NIRS-Sensors der Nährstoffgehalt der Probe ermittelt wird.

An den ersten Anschluss 5a und den zweiten Anschluss 5b können Rohrleitungssysteme, beispielsweise Schläuche, beispielsweise mittels eines Adapters angeschlossen werden. Ein flexibler Einsatz der Analysevorrichtung 10 ermöglicht sich mit Vorteil.

Aufgrund des kompakten Systems der Analysevorrichtung 10 ist diese mobil einsetzbar. Beispielsweise ist es möglich, die Analysevorrichtung 10 in einem Kofferraum oder einer Ladefläche eines Fahrzeuges zu dem Biomasse-Behälter zu transportieren und den Messvorgang direkt an dem Biomasse-Behälter zu starten. Die Messergebnisse beziehungsweise ermittelten Daten liegen sofort vor und können entsprechend direkt verarbeitet oder genutzt werden, ohne durch beispielsweise längere Lager- oder Transportzeit verfälscht zu werden.

Die Erläuterung der erfindungsgemäßen Analysevorrichtung anhand der oben beschriebenen Ausführungsbeispiele ist nicht als Beschränkung der Erfindung auf diese zu betrachten. Vielmehr umfasst die Erfindung jedes neue Merkmal sowie jede Kombination von Merkmalen, was insbesondere jede Kombination von Merkmalen in den Schutzansprüchen beinhaltet, auch wenn dieses Merkmal oder diese Kombination selbst nicht explizit in den Ansprüchen oder den Ausführungsbeispielen angegeben ist.

### Bezugszeichenliste

1: Pumpe
2: Sensoreinheit
3: Elektromotor
4a: weiterführende Leitung
4b: weiterführende Ableitung
5a: ersten Anschluss
5b: zweiten Anschluss
6: Datenübertragungseinheit
7a: Rohrleitungssystem
7b: Rohrleitungssystem
8: Biomasse-Behälter
9: Probe der Biomasse (9a, 9b, 9c)
10: Analysevorrichtung
11: Fenster

## Patentansprüche

1. Mobile Analysevorrichtung (10) zur Bestimmung von chemischen Eigenschaften von Biomasse (9a, 9b, 9c), insbesondere Gülle, in einem Biomasse-Behälter (8), aufweisend
- eine Pumpe (1) zum Heraussaugen einer Probe aus der Biomasse (9a, 9b, 9c)
- einen ersten Anschluss (5a) der Analysevorrichtung (10) an ein zuführendes Rohrleitungssystem (7a),
- einen zweiten Anschluss (5b) der Analysevorrichtung (10) an ein abführendes Rohrleitungssystem (7b), und
- eine Sensoreinheit (2) zum Erfassen von Daten der Probe der Biomasse (9a, 9b, 9c), wobei die Sensoreinheit (2) die Daten der Probe der Biomasse (9a, 9b, 9c) beim Vorbeileiten der Probe an der Sensoreinheit (2) erfasst.

2. Analysevorrichtung nach Anspruch 1, wobei die Sensoreinheit (2) während dem Erfassen der Daten der Probe der Biomasse (9a, 9b, 9c) außerhalb des Biomasse-Behälters (8) angeordnet ist.

3. Analysevorrichtung nach einem der vorhergehenden Ansprüche, wobei die Sensoreinheit (2) zur vorbeileitenden Probe beabstandet angeordnet ist.

4. Analysevorrichtung nach einem der vorhergehenden Ansprüche, wobei die Probe der Biomasse (9a, 9b, 9c) zum Erfassen über den ersten Anschluss (5a) aus dem Biomasse-Behälter (8) heraussagbar und nach dem Erfassen über den zweiten Anschluss (5b), insbesondere zurück in den Biomasse-Behälter (8), abführbar ist.

5. Analysevorrichtung nach einem der vorhergehenden Ansprüche, weiter aufweisend eine Datenübertragungseinheit (6) zum Übertragen der erfassten Daten.

6. Analysevorrichtung nach einem der vorhergehenden Ansprüche, wobei die Sensoreinheit (2) einen Spektroskopie-Sensor, insbesondere einen NIRS-Sensor aufweist.

7. Analysevorrichtung nach einem der vorhergehenden Ansprüche, wobei das zuführende Rohrleitungssystem (7a), insbesondere ein Saugschlauch, zum Herauspumpen der zu analysierenden Probe in die Biomasse (9a, 9b, 9c) einführbar ist.

8. Analysevorrichtung nach Anspruch 6, wobei das zuführende Rohrleitungssystem (7a) zur schichtweisen Analyse der Biomasse (9a, 9b, 9c) in einem eintauchbaren Bereich eine Mehrzahl von in einem Abstand angeordnete Öffnungen aufweist.

9. Analysevorrichtung nach einem der vorhergehenden Ansprüche, weiter aufweisend einen Elektromotor (3) zum Antreiben der Pumpe (2).

10. Analysevorrichtung nach Anspruch 8, wobei eine Menge der zu analysierenden Probe über die Drehzahl des Elektromotors (3) bestimmbar ist.
